# EUROPÄISCHE PATENTSCHRIFT

(11) **EP 0 642 415 B1**
(45) Veröffentlichungstag und Bekanntmachung des Hinweises auf die Patenterteilung: **20.03.1996**
(21) Anmeldenummer: 93912779.1
(22) Anmeldetag: 25.05.1993
(51) Int. Cl.: B32B 15/08, C08G 18/10, C09J 175/06

(54) **METALLBLECH-POLYURETHANKLEBSTOFFSCHICHT-POLYPROPYLENCOPOLYMERISAT-KUNSTSTOFFOLIE-VERBUND, VERFAHREN ZU DESSEN HERSTELLUNG SOWIE DESSEN VERWENDUNG ZUR HERSTELLUNG VON VERPACKUNGSBEHÄLTERN**
SHEET METAL, POLYURETHANE ADHESIVE LAYER AND POLYPROPYLENE COPOLYMER PLASTIC FOIL COMPOSITE MATERIAL, PROCESS FOR PRODUCING THE SAME AND ITS USE FOR PRODUCING PACKAGING CONTAINERS
MATERIAU COMPOSITE CONSTITUE D'UNE TOLE METALLIQUE, D'UNE COUCHE ADHESIVE EN POLYURETHANNE ET D'UN FILM PLASTIQUE EN UN COPOLYMERE DE POLYPROPYLENE, SON PROCEDE DE PRODUCTION ET SON UTILISATION DANS LA PRODUCTION DE RECIPIENTS D'EMBALLAGE

(30) Priorität: 30.05.1992 DE 4217935
(43) Veröffentlichungstag der Anmeldung: 15.03.1995
(73) Patentinhaber: BASF Lacke + Farben AG, D-48165 Münster-Hiltrup (DE)
(72) Erfinder: KIRIAZIS, Leonidas, Dr., D-48151 Münster (DE); KRAUSE, Siegfried, Dr., D-48165 Münster (DE)
(86) Internationale Anmeldenummer: EP9301305
(87) Internationale Veröffentlichungsnummer: WO9324319

(56) Entgegenhaltungen:
- EP-A- 0 022 502
- EP-A- 0 144 642
- EP-A- 0 180 762
- EP-A- 0 249 342
- EP-A- 0 504 436
- GB-A- 1 362 482
- DATABASE WPI Week 9114, Derwent Publications Ltd., London, GB; AN 91-097801
- DATABASE WPI Week 7108, Derwent Publications Ltd., London, GB; AN 71-14902S

## Beschreibung

Die vorliegende Erfindung betrifft einen Metallblech-Polyurethanklebstoffschicht - Polypropylencopolymerisat-Kunststoffolie-Verbund, wobei die Klebstoffschicht aus einem lösemittelhaltigen Zweikomponenten-Polyurethanklebstoff erhalten wird. Die vorliegende Erfindung betrifft des weiteren ein Verfahren zur Herstellung des Verbundes sowie die Verwendung des Verbundes zur Herstellung von Verpackungsbehältern.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführten Sterilisation des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu den Dosen oder Verschlüssen auftretenden mechanischen Beanspruchungen, etwa beim Verformen, $tanzen, Bördeln, Sicken u.ä. der Bleche, standhalten.

Außerdem müssen aufgrund von hohen Lösemittelemissionen beim Trocknen der Lackschicht Vorkehrungen getroffen werden, diese Emissionen und die damit verbundene Umweltbelastung so gering wie möglich zu halten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-OS 3 128 641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Weiterhin sind auch aus der DE-OS 2 912 023, der GB-A-2027391 und der EP-B-31701 Laminate und aus diesen Laminaten hergestellte Lebensmittelverpackungsbehälter, insbesondere Beutel, bekannt.

Verbunde von Metallfolien mit Polyolefin- bzw. Polypropylenfolien sind in einer vielzahl bekannt. Als Haftvermittler werden beispielsweise polarmodifizierte, z.B. mit Carbonsäuren oder Carbonsäureanhydriden gepfropfte Polypropylene eingesetzt. Derartige Verbunde sind z.B. beschrieben in der EP-A-101 250 und der EP-A-312 306. Weiterhin ist es bekannt, MetallblechPolypropylenkunststoffolie-Verbunde herzustellen unter Verwendung von lösemittelhaltigen Zweikomponenten-Polyurethanklebstoffen. Bei PolypropylenkunststoffolieMetallblech-Verbunden tritt jedoch das Problem auf, daß die mit dem Metall verklebten Kunststofffolien eine Neigung zu Weißbruch haben. Ansonsten weisen Polypropylen-Kunststoffolien eine größere Chemikalienbeständigkeit auf als Polyethylen-Kunststoffolien.

Der vorliegenden Erfindung lag somit insbesondere die Aufgabe zugrunde, Polypropylenkunststoffolie-Metallblech-Verbunde zu entwickeln, die keinen Weißbruch nach der Verformung zu einem Verpackungsbehälter aufweisen. Außerdem sollte natürlich die Haftung der Kunststoffolie auf dem Metallblech ausgezeichnet sein. Selbstverständlich sollte dabei die thermoplastische Polypropylenfolie das Metall optimal vor dem Angriff des Füllgutes und daraus resultierender Korrosion schützen sowie eine Beeinflussung des Füllgutes durch Korrosionsprodukte des Metalles verhindern. Desweiteren sollte es selbstverständlich durch die Kunststoffolie selbst, etwa durch herausgelöste Bestandteile, zu keiner Beeinflussung bzw. Beeinträchtigung des Füllgutes kommen, weder bei der im Anschluß an die Abfüllung durchgeführten Sterilisation des Füllgutes noch bei der anschließenden Lagerung der verpackten Güter, insbesondere Lebensmittel. Außerdem sollte gewährleistet sein, daß das Verkleben der Kunststoffolie auf das Metallblech bei Temperaturen unterhalb des Schmelzpunktes des Polypropylenkunststoffs bei üblichen Kaschiergeschwindigkeiten ausgeführt werden kann.

Überraschenderweise wird diese Aufgabe gelöst durch einen Metallblech-Polyurethanklebstoffschicht-Polypropylencopolymerisat-Kunststoffolie-Verbund, wobei die Klebstoffschicht aus einem lösemittelhaltigen Zweikomponenten-Polyurethanklebstoff erhalten wird. Der Verbund ist dadurch gekennzeichnet, daß die Polypropylencopolymerisat-Kunststoffolie im wesentlichen oder vollständig besteht aus statistischem Polypropylencopolymerisat, welches erhältlich ist durch statistische Copolymerisation von 1 bis 8 Gew.-% Ethylen und/oder weiteren α-Monoolefinen mit Ausnahme von Propylen und 99 bis 92 Gew.-% Propylen, bezogen auf das Gesamtgewicht der Monomerenzusammensetzung, wobei das Polypropylencopolymerisat eine Molmassenverteilung M_{W} : Mₙ im Bereich von 2 bis 8 und einen Schmelzindex MFI 230°C/2,16 kg im Bereich von 5 bis 10 g/10 min, bevorzugt im Bereich von 6 bis 10 g/10 min, aufweist.

Gegenstand der Erfindung ist außerdem ein Verfahren zur Herstellung des Verbundes sowie die Verwendung des beschichteten Metallblechs zur Herstellung von Verpackungsbehältern.

Die Vorteile der erfindungsgemäßen Metallblech-2K-Polyurethanklebstoffschicht-Polypropylencopolymerisat-Kunststoffolie-Verbunde sind insbesondere darin zu sehen, daß die Verbunde keine Weißbruchneigung nach dem Verformen zu einem Verpackungsbehälter aufweisen.

Zur Herstellung der erfindungsgemäßen beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.
Je nach Anwendungszweck sind auch Metallstärken von mehr als 1 mm möglich.

Die Metallbleche werden mit der thermoplastischen Polypropylenkunststoffolie beschichtet, wobei die Haftung der Folie auf dem Metallblech mittels eines Polyurethan-Klebstoffes bewerkstelligt wird.

Die zur Herstellung der Kunststoffolie verwendeteten thermoplastischen Polypropylene sind statistische Polypropylen-Copolymerisate jeweils in Form einer Folie oder eines Films. Dabei kann es sich auch um zusammengesetzte Folien und Filme (Verbundfolie und -filme) handeln, die beispielsweise erhalten werden durch gemeinsames Extrudieren der Polypropylen-Random-Copolymerisate. Derartige Polypropylenfolien werden nach bekannten Verfahren (Blasverfahren, Chill-roll-Verfahren etc.) aus Granulaten der Polypropylene gefertigt.

Die Polypropylencopolymerisat-Kunststoffolie des erfindungsgemäßen Verbundes besteht vollständig oder im wesentlichen aus statistischem Polypropylencopolymerisat, welches erhältlich ist durch statistische (Random-) Copolymerisation von 1 bis 8 Gew.-%. Ethylen und/oder weiteren α-Monoolefinen mit Ausnahme von Propylen und 99 bis 92 Gew.-% Propylen, bezogen auf das Gesamtgewicht der Monomerenzusammensetzung.
Beispiele für weitere α-Monoolefine mit Ausnahme von Propylen sind beispielsweise C4- bis C12 - α - Monoolefine, wie Buten-1, 4-Methylpenten-1, Hexen-1, n-Okten-1, n-Decen-1 und n-Dodecen-1.

Besonders bevorzugt wird die Polypropylencopolymerisat-Kunststoffolie des erfindungsgemäßen Verbundes aus Propylen-Copolymerisat, welches ausschließlich aus den oben angegebenen Mengen an Ethylen und Propylen erhalten wird, gefertigt.

Die Polypropylencopolymerisate haben eine Molmassenverteilung M_{W} : Mₙ im Bereich von 2 bis 8 und einen Schmelzindex MFI 230°C/2,16 kg im Bereich von 5 bis 10 g/10 min, bevorzugt im Bereich von 6 bis 10 g/10 min (gemessen nach DIN 53 735).

Die Copolymerisate können hergestellt werden durch das in der DE-OS 37 30 022 beschriebene Polymerisationsverfahren unter Verwendung eines Ziegler-Natta-Katalysatorsysteme. Beispielsweise werden sie durch das sog. Gasphasenpolymerisationsverfahren bei Temperaturen von 20 bis 160°C und bei einem Druck von 1 bis 100 bar hergestellt. Die Molekulargewichte der Polymerisate lassen sich durch allgemein bekannte Maßnahmen regeln, z.B. mittels Wasserstoff als Polymerisationsregler oder durch peroxidischen Abbau.

Vorzugsweise werden die Kunststoffolien der erfindungsgemäßen Verbunde aus Polypropylencopolymerisaten erhalten, die hergestellt werden durch statistische Copolymerisation von 2 bis 4 Gew.-%. Ethylen und 98 bis 96 Gew.-%. Propylen, bezogen auf das Gesamtgewicht der Monomerenzusammensetzung, wobei die Random-Copolymerisate eine Molmassenverteilung M_{W} : Mₙ im Bereich von 2 bis 5, besonders bevorzugt im Bereich von 3 bis 4, und einen Schmelzindex MFI 230°C/2,16 kg im Bereich von 5 bis 10 g/10 min, besonders bevorzugt im Bereich von 7 bis 9 g/10 min, aufweisen (gemessen nach DIN 53 735).

Die Polypropylencopolymerisate, die gemäß der vorliegenden Erfindung zur Herstellung der Metall-Kunststoffolie-Verbunde verwendet werden, haben einen Schmelzbereich von ca. 135°C bis ca. 150°C (ermittelt durch DSC). Sie sind beispielsweise erhältlich unter der Handelsbezeichnung Novolen® 3225 MCX (BASF AG).

Bevorzugt besteht der Kunststoff der in dem erfindungsgemäßen Verbund verwendeten Kunststoffolie vollständig aus dem zuvor beschriebenen Polypropylencopolymerisat. Es ist aber im Rahmen der Erfindung auch möglich, Mischungen des beschriebenen Copolymerisats und geringer Mengen anderer thermoplastischer Kunststoffe, vorzugsweise Polypropylene, zu einer in dem Verbund einsetzbaren Kunststoffolie zu extrudieren. Weiterhin können durch Coextrusion erhältliche Mehrschichtfolien aus den genannten Propylen-Copolymerisaten eingesetzt werden.

Die thermoplastische Polypropylen-Kunststoffolie des erfindungsgemäßen Verbundes kann noch übliche Additive, wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditive, Carl-Hanser Verlag zu entnehmen.

Besonders vorteilhaft ist es, wenn die thermoplastischen Polypropylenfolien der Verbunde bis zu 0,5 Gew.-%, bezogen auf das Gesamtgewicht der Folie, Erucasäureamid und/oder Ölsäureamid als Gleitmittel sowie bis zu 0,2 Gew.-%, bezogen auf das Gesamtgewicht der Kunststoffolie, Antiblockmittel, vorzugsweise Siliciumdioxid, sowie ggf. Antioxidantien und ggf. weitere Verarbeitungsstabilisatoren und weitere Additive enthalten.

Als Antioxidantien werden bevorzugt Phenolderivate verwendet. Weitere geeignete Additive sind Titandioxid, Calciumcarbonat, Diatomeenerde, Metallstearate sowie primäre und sekundäre Fettsäureamide. Als UV-Stabilisatoren werden beispielsweise UV-Stabilistoren vom HALS-Typ eingesetzt.

Die zwischen der Polypropylencopolymerisat-Kunststoffolie und dem Metallblech angeordnete Klebstoffschicht kann ebenfalls die zuvor genannten Additive enthalten. Bevorzugt werden diese jedoch in die Polypropylenkunststoffolie eingearbeitet.

Die zwischen dem Metallblech und der Polypropylencopolymerisat-Kunststoffolie angeordnete Klebstoffschicht wird aus einem zweikomponentigen lösemittelhaltigen Polyurethanklebstoff erhalten. Zum Aufbringen des Klebstoffes auf das Metallblech kann jedes geeignete Verfahren angewendet werden. Der Zweikomponenten-Polyurethanklebstoff wird durch Auftragen aus Lösungen in organischen Lösemitteln aufgebracht. Die Lösungen haben in der Regel einen Klebstoffgehalt von 5 bis 80 Gew.-%. Die aufgebrachte Klebstoffmenge beträgt in der Regel etwa 1 bis 15 g/m2 Fläche.

Der Zweikomponenten-Polyurethanklebstoff besteht aus einer OH-haltigen Komponente (I), zum Beispiel aus Polyesterpolyolen, Polyetherpolyolen oder niedermolekularen Polyolen, und aus einer isocyanatgruppenhaltigen Komponente (II). Die beiden Kompononten werden unmittelbar vor dem Auftrag auf das Substrat miteinander vermischt.

Bevorzugt werden als Komponente (I) des 2K-Klebstoffes Polyesterpolyole verwendet. Diese werden hergestellt durch Veresterung von Dicarbonsäuren mit überschüssigen Di- bzw. Polyolen.

Die Veresterung verläuft bei höherer Temperatur in Lösung oder in der Schmelze. Aus Dicarbonsäuren und Glykolen entstehen linear aufgebaute Polyester, während die Veresterung bei Mitverwendung von Triolen und/oder höherwertigen Polyolen zu mehr oder weniger verzweigten Polyestern führt. Die Polyesterpolyole sind erhältlich durch Umsetzung von Polycarbonsäuren oder deren veresterungsfähigen Derivaten, ggf. zusammen mit Monocarbonsäuren, Polyolen, ggf. zusammen mit Monoolen, sowie ggf. weiteren modifizierenden Komponenten.

Beispiele für geeignete Polycarbonsäuren sind Phthalsäure, Isophthalsäure, Terephthalsäure, Halogenphthalsäuren, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Cyclohexantetracarbonsäure und Cyclobutantetracarbonsäure.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxialkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten zur Herstellung der Polyester sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydoxiethylisocyanurat, Polyethylenglykol, Polypropylenglykol, gegebenenfalls zusammen mit einwertigen Alkoholen, wie beispielsweise Butanol, Octanol, Laurylalkohol, ethoxylierten bzw. propxylierten Phenolen.

Geeignete modifizierende Komponenten sind Polyisocyanate und/oder Diepoxidverbindungen, ggf. auch Monoisocyanate und/oder Monoepoxidverbindungen.

Als OH-Komponente (I) des Zweikomponenten-Polyurethanklebstoffs sind auch Polyetherpolyole, die z.B. durch Anlagerung von Ethylenoxid oder Propylenoxid an geeignete Polyole erhältlich sind, geeignet.

Als isocyanatgruppenhaltige Komponente (II) des Polyurethanklebstoffes sind beispielsweise geeignet:

Aromatische Isocyanate, wie z.B. 2,4-, 2,6-Toluylendiisocyanat und deren Gemische, 4,4'-Diphenylmethandiisocyanat, m-Phenylen-, p-Phenylen-, 4,4-Diphenyl-, 1,5-Naphthalin-, 1,4-Naphthalin-, 4,4-Toluidin-, Xylylendiisocyanat sowie substituierte aromatische Systeme, wie z.B. Dianisidindiisocyanate, 4,4-Diphenyletherdiisocyanate oder Chlorodiphenylendiisocyanate und höherfunktionelle aromatische Isocyanate, wie z.B. 1,3,5-Triisocyanatobenzol, 4,4', 4''-Triisocyanattriphenylmethan, 2,4,6-Triisocyanatotoluol und 4,4'-Diphenyldimethylmethan-2,2', 5,5'-tetraisocyanat; cycloaliphatische Isocyanate, wie z.B. 1,3-Cylocopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat.

Weiterhin können als isocyanatgruppenhaltige Komponente (II) auch Präpolymere mit höherer Molmasse verwendet werden. Zu nenen sind hierbei Addukte aus Toluylendiisocyanat und Trimethylolpropan, ein aus 3 Molekülen Hexamethylendiisocyanat gebildetes Biuret sowie die Trimeren des Hexamethylendiisocyanates und des 3,5,5-Trimethyl-1-isocyanato-3-isocyanatomethylcyclohexans.

Die Menge der Komponente (II) wird so gewählt, daß das Verhältnis der Isocyanatgruppen von (II) zu den OH-Gruppen (I) i. a. im Bereich von 1:3 bis 3:1 liegt.

Geeignete Isocyanatkomponenten (II) sind beispielsweise die auf dem Markt unter der Bezeichnung Desmodur® N und Desmodur® L (Bayer AG) erhältlichen Isocyanatlösungen. Geeignete Lösungsmittel für die Isocyanatkomponenten sind beispielsweise Butylacetat und Ethylacetat. Ein weiterer geeigneter 2K-Polyurethanklebstoff ist der unter der Handelsbezeichnung Adcote 549 B/Catalyst F der Firma Morton Internationl B.V. erhältliche Kleber.

Besonders bevorzugt wird als Zweikomponenten-Klebstoff ein OH-haltiger Polyester, der als Carbonsäurekomponente im wesentlichen oder vollständig Isophthalsäure und/oder Terephthalsäure enthält und als Isocyanatkomponente ein Polyurethanpräpolymer auf Basis von Toluylendiisocyanat verwendet. Der Polyester kann mit Di- und/oder Monoepoxidverbindungen modifiziert sein.

Die Herstellung der Metallblech-Polyurethanklebstoffschicht Polypropylencopolymerisat - Kunststoffolie-Verbunde ist ein allgemein bekanntes Verfahren. Es wird dabei so vorgegangen, daß die Zweikomponenten-Polyurethanklebstofflösung auf das Metallblech appliziert wird und die durch Extrusion hergestellte Polypropylenkunststoffolie auf das erhitzte, mit dem Klebstoff beschichtete Metallblech aufkaschiert wird.

Die Beschichtung des Metallblechs bzw. der hergestellte Verbund aus Folie und Klebstoff weist im allgemeinen eine Gesamttrockenfilmstärke von weniger als 500 µm, bevorzugt 10 bis 200 µm und besonders bevorzugt von weniger als 100 µm auf. Die Stärke der Klebstoffschicht liegt dabei zwischen 0,5 und 100 µm. Die Stärke der Polypropylenfolienschicht ergibt sich entsprechend zu Werten zwischen 10 und 499,5 µm.

Abschließend sei noch darauf hingewiesen, daß es auch möglich ist, das Metallblech an der dem Füllgut abgewandten Seite ebenfalls mit einer bevorzugt planebenen, thermoplastischen Verbundfolie oder aber mit einem flüssigen oder pulverförmigen Beschichtungsmittel zu beschichten.

Die erfindungsgemäßen Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600-606: W. Panknin, A. Breuer, M. Sodeik, "Abstreckziehen als Verfahren zum Herstellen von Dosen aus Weißblech", SHEET METAL INDUSTRIES, August 1976: W. Panknin, CH. Schneider, M. Sodeik, "Plastic Deformation of tinplate in Can Manufacturing"; Verpackungs-Rundschau, Heft 4/1971, Seiten 450-458: M. Sodeik, I. Siewert, "Die nahtlose Dose aus Weißblech"; Verpackungs-Rundschau, Heft 11/1975, Seiten 1402-1407: M. Sodeik K. Haaß, I. Siewert, "Herstellen von Dosen aus Weißblech durch Tiefziehen", Arbeitsmappe für den Verpackungspraktiker, Metalle, Teil II, Gruppe 2, Weißblech, Lfd. Nr. 220.042 bis 220.048 in neue Verpackung 12/87, Seite B 244 bis B 246 und neue Verpackung 1/88, Seiten B 247 bis B 250).

Bezüglich näherer Einzelheiten wird daher auf die Literatur verwiesen.

Die erfindungsgemäßen Polypropylenfolie-Klebstoffschicht-Metallblech-Verbunde zeigen praktisch keinen Weißbruch mehr, des weiteren sind die Haftungen zwischen dem Metall und dem Polyurethan-Klebstoff einerseits und der Polypropylen-Kunststoffolie und dem Polyurethan-Klebstoff andererseits außerordentlich gut. Die Polypropylendeckschicht schützt das Metall sehr gut vor dem Angriff des Füllgutes, wobei eine Beeinflussung des Füllgutes durch Korrosionsprodukte des Metalles ebenfalls verhindert wird. Eine Beeinträchtigung des Füllgutes durch herausgelöste Bestandteile der Polypropylendeckschichtfolie ist bei der Sterilisation und Lagerung der verpackten Güter nicht festzustellen. Außerdem sind die erfindungsgemäßen Verbunde gut herzustellen, da das Verkleben (Kaschieren) der Polypropylenkunststoffolie auf das Metallblech mittels des Polyurethanklebstoffes unterhalb des Schmelzpunktes des Polypropylenkunststoffs bei praxisüblichen Kaschiergeschwindigkeiten durchgeführt werden kann.

Nachfolgend wir die Erfindung anhand von Ausführungsbeispielen näher erläutert:

### Beispiel 1:

Das unter der Handelsbezeichnung Novolen® 3225 MCX (BASF AG) erhältliche Polypropylencopolymerisat wird zu einer 200 µm starken Kunststoffolie mittels Breitschlitzdüsenextrusion extrudiert. Ein Zweikomponenten-Polyurethan-Klebstoff (Adcote 549 B/Catalyst F der Firma Morton International B.V.) wird auf ein Metallblech aufgerakelt (12 g Naß/m²), das mit dem Klebstoff beschichtete Blech wird in einen Ofen gestellt (Ofentemperatur 150°C), anschließend wird die Kunststoffolie bei 100°C auf den noch nicht ausgehärteten Klebstoff auflaminiert. Nach 5 Tagen wird die Haftung getestet. Sie beträgt größer 20 N/25 mm.
Nach dem Stanzen des Verbundes zu einer Konservendose wird keinerlei Weißbruch beobachtet.

## Patentansprüche

1. Metallblech-Polyurethanklebstoffschicht-Polypropylencopolymerisat-Kunststoffolie-Verbund, wobei die Klebstoffschicht aus einem lösemittelhaltigen Zweikomponenten-Polyurethanklebstoff erhalten wird, dadurch gekennzeichnet, daß die Polypropylencopolymerisat-Kunststoffolie im wesentlichen oder vollständig besteht aus statistischem Polypropylencopolymerisat, welches erhältlich ist durch statistische Copolymerisation von 1 bis 8 Gew.-% Ethylen und/oder weiteren α-Monoolefinen mit Ausnahme von Propylen und 99 bis 92 Gew.-% Propylen, bezogen auf das Gesamtgewicht der Monomerenzusammensetzung, wobei das Polypropylencopolymerisat eine Molmassenverteilung M_{W} : Mₙ im Bereich von 2 bis 8 und einen Schmelzindex MFI 230°C/2,16 kg im Bereich von 5 bis 10 g/10 min, bevorzugt im Bereich von 6 bis 10 g/10 min, aufweist.

2. Metallblech-Polyurethanklebstoffschicht-Polypropylencopolymerisat-Kunststoffolie-Verbund nach Anspruch 1, dadurch gekennzeichnet, daß das statistische Polypropylencopolymerisat ausschließlich erhalten wird durch statistische Copolymerisation von Ethylen und Propylen.

3. Metallblech-Polyurethanklebstoffschicht-Polypropylencopolymerisat-Kunststoffolie-Verbund nach Anspruch 1 oder 2, dadurch gekennzeichnet, daß die Polypropylencopolymerisat-Kunststoffolie im wesentlichen oder vollständig besteht aus statistischem Polypropylencopolymerisat aus 2 bis 4 Gew.-% Ethylen und 98 bis 96 Gew.-% Propylen, bezogen auf das Gesamtgewicht der Monomerenzusammensetzung, mit einer Molmassenverteilung M_{W} : Mₙ im Bereich von 2 bis 5, besonders bevorzugt im Bereich von 3 bis 4, und einem Schmelzindex MFI 230°C/2,16 kg im Bereich von 5 bis 10 g/10 min, besonders bevorzugt im Bereich von 7 bis 9 g/10 min.

4. Metallblech-Polyurethanklebstoffschicht-Polypropylencopolymerisat-Kunststoffolie-Verbund nach Anspruch 1 bis 3, dadurch gekennzeichnet, daß die Polypropylenkunststoffolie bis zu 0,5 Gew.-%, bezogen auf das Gesamtgewicht der Kunststoffolie, Erucasäureamid und/oder Ölsäureamid sowie bis zu 0,2 Gew.-%, bezogen auf das Gesamtgewicht der Kunststoffolie, Antiblockmittel, bevorzugt SiO2, sowie ggf. Antioxidantien sowie ggf. weitere Verarbeitungsstabilisatoren und weitere Additive enthält.

5. Metallblech-Polyurethanklebstoffschicht-Polypropylencopolymerisat-Kunststoffolie-Verbund nach Anspruch 1 bis 4, dadurch gekennzeichnet, daß als Zweikomponenten-Polyurethanklebstoff ein hydroxylgruppenhaltiger Polyester, der als Carbonsäurekomponente im wesentlichen oder vollständig Isophthalsäure und/oder Terephthalsäure enthält, und eine isocyanatgruppenhaltige Polyurethanpräpolymerzusammensetzung auf Basis von Toluylendiisocyanat verwendet wird.

6. Verfahren zur Herstellung des Metallblech-Polyurethanklebstoffschicht-PolypropylencopolymerisatKunststoffolie-Verbundes nach Anspruch 1 bis 5, dadurch gekennzeichnet, daß der Zweikomponenten-Polyurethanklebstoff auf das Metallblech appliziert wird und die Polypropylenkunststoffolie auf das erhitzte, mit dem Klebstoff beschichtete Metallblech aufkaschiert wird.

7. Verwendung der Metallblech-Polyurethanklebstoffschicht-Polypropylencopolymerisat-Kunststoffolie-Verbunde nach Anspruch 1 bis 5 zur Herstellung von Verpackungsbehältern.

## Claims

1. Metal sheeting/polyurethane adhesive layer/polypropylene copolymer plastic film composite in which the adhesive layer is obtained from a solvent-containing two-component polyurethane adhesive, characterized in that the polypropylene copolymer plastic film essentially or fully comprises random polypropylene copolymer obtainable by random copolymerisation of from 1 to 8% by weight of ethylene and/or further α-monoolefins, with the exception of propylene, and from 99 to 92% by weight of propylene, based on the total weight of the monomer composition, the polypropylene copolymer having a molecular weight distribution M_{w}:Mₙ in the range from 2 to 8 and a melt flow index MFI 230°C/2.16 kg in the range from 5 to 10 g/10 min, preferably in the range from 6 to 10 g/10 min.

2. Metal sheeting/polyurethane adhesive layer/polypropylene copolymer plastic film composite according to Claim 1, characterized in that the random polypropylene copolymer is obtained exclusively by random copolymerization of ethylene and propylene.

3. Metal sheeting/polyurethane adhesive layer/polypropylene copolymer plastic film composite according to Claim 1 or 2, characterized in that the polypropylene copolymer plastic film essentially or fully comprises random polypropylene copolymer comprising from 2 to 4% by weight of ethylene and from 98 to 96% by weight of propylene, based on the total weight of the monomer composition, having a molecular weight distribution M_{w}:Mₙ in the range from 2 to 5, particularly preferably in the range from 3 to 4, and a melt flow index MFI 230°C/2.16 kg in the range from 5 to 10 g/10 min, particularly preferably in the range from 7 to 9 g/10 min.

4. Metal sheeting/polyurethane adhesive layer/polypropylene copolymer plastic film composite according to Claim 1 to 3, characterized in that the polypropylene plastic film contains up to 0.5% by weight, based on the total weight of the plastic film, of erucamide and/or oleamide and up to 0.2% by weight, based on the total weight of the plastic film, of antiblocking agent, preferably SiO2 [sic], and if desired, antioxidants and, if desired, further processing stabilizers and further additives.

5. Metal sheeting/polyurethane adhesive layer/polypropylene copolymer plastic film composite according to Claim 1 to 4, characterized in that the two-component polyurethane adhesive used is a hydroxyl group-containing polyester in which the carboxylic acid component is essentially or fully isophthalic acid and/or terephthalic acid, and an isocyanate group-containing polyurethane prepolymer composition based on tolylene diisocyanate.

6. Process for the production of the metal sheeting/polyurethane adhesive layer/polypropylene copolymer plastic film composite according to Claim 1 to 5, characterized in that the two-component polyurethane adhesive is applied to the metal sheeting, and the polypropylene plastic film is laminated onto the heated, adhesive-coated metal sheeting.

7. Use of the metal sheeting/polyurethane adhesive layer/polypropylene copolymer plastic film composites according to Claim 1 to 5, for the production of packaging containers.

## Revendications

1. Matériau composite constitué d'une tôle métallique, d'une couche adhésive en polyuréthane, et d'un film plastique en un copolymère de polypropylène, la couche adhésive étant obtenue à partir d'un adhésif de polyuréthane à deux composants contenant des solvants, caractérisé en ce que le film plastique en copolymère de polypropylène se compose essentiellement ou entièrement de copolymérisat statistique de polypropylène, que l'on peut obtenir par une copolymérisation statistique de 1 à 8 % en poids d'éthylène et/ou d'autres α-mono-oléfines, à l'exception du propylène, et de 99 à 92 % en poids de propylène, par rapport au poids total de la composition de monomères, le copolymérisat de polypropylène présentant une distribution massique en mole de M_{w} : Mₙ dans le domaine de 2 à 8 et un index de fusion MFI de 230°C/2,16 kg dans le domaine de 5 à 10 g/10 min, de préférence dans le domaine de 6 à 10 g/10 min.

2. Matériau composite constitué d'une tôle métallique, d'une couche adhésive en polyuréthane, et d'un film plastique en un copolymère de polypropylène selon la revendication 1, caractérisé en ce que le copolymérisat statistique de polypropylène est obtenu exclusivement par une copolymérisation statistique d'éthylène et de propylène.

3. Matériau composite constitué d'une tôle métallique, d'une couche adhésive en polyuréthane, et d'un film plastique en un copolymère de polypropylène selon la revendication 1 ou 2, caractérisé en ce que le film plastique en copolymère de polypropylène se compose essentiellement ou entièrement de copolymérisat statistique de polypropylène de 2 à 4 % en poids d'éthylène et de 98 à 96 % en poids de propylène, par rapport au poids total de la composition de monomères, avec une distribution massique en mole de M_{w} : Mₙ dans le domaine de 2 à 5, particulièrement de préférence de 3 à 4, et un index de fusion MFI de 230°C/2,16 kg dans le domaine de 5 à 10 g/10 min, particulièrement de préférence dans le domaine de 7 à 9 g/10 min.

4. Matériau composite constitué d'une tôle métallique, d'une couche adhésive en polyuréthane, et d'un film plastique en un copolymère de polypropylène selon les revendications 1 à 3, caractérisé en ce que le film de matière plastique en polypropylène contient jusqu'à 0,5 % en poids, par rapport au poids total du film de matière plastique, d'érucamide et/ou d'oléamide ainsi que jusqu'à 0,2 % en poids, par rapport au poids total du film de matière plastique, d'agent antiblocage, de préférence de SiO₂ ainsi que, le cas échéant, d'agents anti-oxydants ainsi que, le cas échéant, d'agents stabilisateurs de mise en oeuvre et d'autres additifs.

5. Matériau composite constitué d'une tôle métallique, d'une couche adhésive en polyuréthane, et d'un film plastique en un copolymère de polypropylène selon les revendications 1 à 4, caractérisé en ce que l'on utilise, en tant qu'adhésif de polyuréthane à deux composants, un polyester contenant des groupements hydroxyles, qui contient en tant que composant d'acide carboxylique essentiellement ou complètement de l'acide isophtalique et/ou de l'acide téréphtalique, et une composition de prépolymère de polyuréthane contenant des groupements isocyanates à base de diisocyanate de tolylène.

6. Procédé de production du matériau composite constitué d'une tôle métallique, d'une couche adhésive en polyuréthane, et d'un film plastique en un copolymère de polypropylène selon les revendications 1 à 5, caractérisé en ce que l'adhésif de polyuréthane à deux composants est appliqué sur la tôle métallique et en ce que le film de matière plastique en polypropylène est contre-collé avec la tôle métallique revêtue de l'adhésif.

7. Utilisation du matériau composite constitué d'une tôle métallique, d'une couche adhésive en polyuréthane, et d'un film plastique en un copolymère de polypropylène selon les revendications 1 à 5 en vue de la production de récipients d'emballage.
